# EUROPEAN PATENT APPLICATION

(11) **EP 4 310 997 A1**
(43) Date of publication of application: **24.01.2024**
(21) Application number: 22215856.0
(22) Date of filing: 22.12.2022
(51) Int. Cl.: H01M 50/103, H01M 50/14, H01M 50/15, H01M 50/164, H01M 50/176, H01M 50/342, H01M 50/30

(54) **BATTERY, BATTERY ASSEMBLY AND ELECTRONIC APPARATUS**

(30) Priority: 20.07.2022 CN 202221879355 U; 20.07.2022 CN 202221887368 U
(71) Applicant: AESC Japan Ltd., Kanagawa, 2520012 (JP)
(72) Inventor: Wu, Changjun, Jiangyin City, Wuxi City (CN); Chen, Zhuolie, Jiangyin City, Wuxi City (CN); Cui, Xin, Jiangyin City, Wuxi City (CN); He, Yafei, Jiangyin City, Wuxi City (CN)
(74) Representative: Becker, Eberhard

(57) **Abstract**

A battery (100), a battery assembly (200), and an electronic apparatus (300) are provided. The battery (100) includes: a casing (2) having an opening (21); a cell (3) disposed in the casing (2); and a cover plate (1) covering the opening (21) of the casing (2). The cover plate (1) includes a cover plate body (11) provided with a first hole (111) and a high temperature resistant sheet (12) disposed on an upper surface of the cover plate body (11) and covering an upper opening of the first hole (111). The high temperature resistant sheet (12) has a weak portion, and at least a part of an orthographic projection of the weak portion is located in the first hole (111) in a direction perpendicular to the cover plate body (11).

## Description

### BACKGROUND

### Technical Field

The disclosure relates to the technical field of batteries, and in particular, relates to a battery, a battery assembly, and an electronic apparatus.

### Description of Related Art

In recent years, the rapid rise of new energy vehicles has brought great impetus to the sustainable development of society and the harmonious coexistence of human beings and the environment. Among various conceptual new energy vehicles, electric vehicles are technically mass-produced and have received increasing attention and become more and more popular with the support of the government. As a solution to energy and environmental problems, the key technology in electric vehicles is the use of rechargeable battery assemblies used to replace the gasoline engines as the power source.

### SUMMARY

The disclosure aims to provide a battery, a battery assembly, and an electronic apparatus capable of ensuring the overall safety and stability of the battery and further prolonging the service life.

In order to solve the above technical problems, an embodiment of the disclosure provides a battery including a casing, a cell, and a cover plate. The casing has an opening. The cell is disposed in the casing. The cover plate covers the opening of the casing. The cover plate includes a cover plate body and a high temperature resistant sheet. The cover plate body is provided with a first hole. The high temperature resistant sheet is disposed on an upper surface of the cover plate body and covers an upper opening of the first hole. The high temperature resistant sheet has a weak portion, and at least a part of an orthographic projection of the weak portion is located in the first hole in a direction perpendicular to the cover plate body.

Compared to the related art, in the embodiments of the disclosure, since the cover plate body of the battery is further provided with the high temperature resistant sheet and the high temperature resistant sheet covers the cover plate body, high temperature substances from other batteries are prevented from entering the battery from the first hole. In this way, if thermal runaway occurs in one battery, other batteries are prevented from being affected, and cascading thermal runaway is thus prevented from being generating. The probability of thermal runaway propagation is thereby lowered. Further, the weak portion of the high temperature resistant sheet is located above the first hole and can be broken under certain conditions. As such, a channel communicating with the outside atmosphere is formed inside the battery, so that the high pressure or high temperature accumulated inside the battery can be discharged to the outside. It is ensured that the explosion-proof mechanism directly under the high temperature resistant sheet can function normally. That is, by providing such a cover plate provided in the disclosure, the probability of chain propagation of thermal runaway can be further lowered while ensuring the normal operation of the original explosion-proof mechanism. As such, the possibility of explosion or fire of the battery as a whole is lowered, and the safety of the battery is improved.

### BRIEF DESCRIPTION OF THE DRAWINGS

One or more embodiments are illustrated by the pictures in the corresponding accompanying drawings, and the illustrative description does not constitute limitations to the embodiments. Elements in the accompanying drawings with the same reference numerals represent similar elements. Unless otherwise stated, the figures in the accompanying drawings do not constitute a scale limitation.
FIG. 1 is a schematic structural view of an electronic apparatus according to an embodiment of the disclosure.
FIG. 2 is a schematic structural view of a battery according to an embodiment of the disclosure.
FIG. 3 is an exploded view of a cover plate according to an embodiment of the disclosure.
FIG. 4 is a schematic structural view of a weak portion exhibiting another structure according to an embodiment of the disclosure.
FIG. 5 is an exploded view of the battery according to an embodiment of the disclosure.
FIG. 6 is a top view of the battery according to an embodiment of the disclosure.
FIG. 7 is a cross-sectional view of the battery according to an embodiment of the disclosure.
FIG. 8 is a local enlargement view of A in FIG. 6.
FIG. 9 is a schematic structural view of a high temperature resistant sheet and a cover plate body in a battery assembly separated from each other according to another embodiment of the disclosure.
FIG. 10 is a schematic structural view of a battery assembly according to another embodiment of the disclosure.
FIG. 11 is a schematic structural view of a battery assembly according to still another embodiment of the disclosure.

### DESCRIPTION OF THE EMBODIMENTS

To better illustrate the goal, technical solutions, and advantages of the disclosure, the accompanying drawings are included to provide a detailed description of each of the embodiments of the disclosure. However, it can be understood by a person having ordinary skill in the art that, in the various embodiments of the disclosure, numerous technical details are provided in order to provide the reader with a better understanding of the disclosure. However, even without these technical details and various changes and modifications based on the following embodiments, the technical solutions claimed in the disclosure can still be achieved.

In the following description, for the purpose of illustrating various disclosed embodiments, certain specific details are set forth in order to provide a thorough understanding of the various disclosed embodiments. A person having ordinary skill in the art will recognize, however, that the embodiments may be implemented without one or more of these specific details. In other instances, well-known devices, structures, and techniques associated with the disclosure may not have been shown or described in detail, so as not to unnecessarily obscure the description of the embodiments.

Unless the context requires otherwise, throughout the specification and claims, the word "including" and variations thereof such as "comprising" and "having", should be construed in an open and inclusive sense, i.e., should be construed as "including but not limited to".

The embodiments of the disclosure will be described in detail in the following paragraphs with reference to the accompanying drawings, so as to more clearly understand the objects, features, and advantages of the disclosure. It should be understood that the embodiments shown in the accompanying drawings are not intended to limit the scope of the disclosure, but are only intended to illustrate the essential spirit of the technical solutions of the disclosure.

Throughout this specification, reference to "one embodiment" or "an embodiment" means that a particular feature, structure, or characteristic described in connection with the embodiment is included in at least one embodiment. Therefore, the presence of "in one embodiment" or "in an embodiment" in various places throughout the specification are not necessarily all referring to the same embodiment. In addition, the particular features, structures, or characteristics may be combined in any manner in one or more embodiments.

As used in this specification and the appended claims, the singular forms "a" and "the" include plural referents unless the context clearly dictates otherwise. It should be noted that the term "or" is generally employed in its sense including "and/or" unless the context clearly dictates otherwise.

In the following description, in order to clearly demonstrate the structure and operation of the disclosure, various directional words will be used for description. However, words such as "front", "back", "left", "right", "outside", "inside", "outward", "inward", "up", "down", and the like should be construed as words of convenience and should not be construed as words of limitation.

In a rechargeable battery assembly currently available on the market, a plurality of batteries are provided, and these batteries are connected in the battery casing through an appropriate series-parallel connection structure. In such a design, the relatively high energy density requirements of electric vehicles can be satisfied. Further, the series-parallel arrangement of the batteries may be flexibly adjusted according to different design requirements of various automobiles, so this design is highly practical. However, when thermal runaway occurs within one battery of the battery assembly, the high temperature substances ejected by this battery will affect other batteries, resulting in thermal runaway of other batteries, which in turn leads to thermal runaway of the entire battery assembly, leading to fires and other situations.

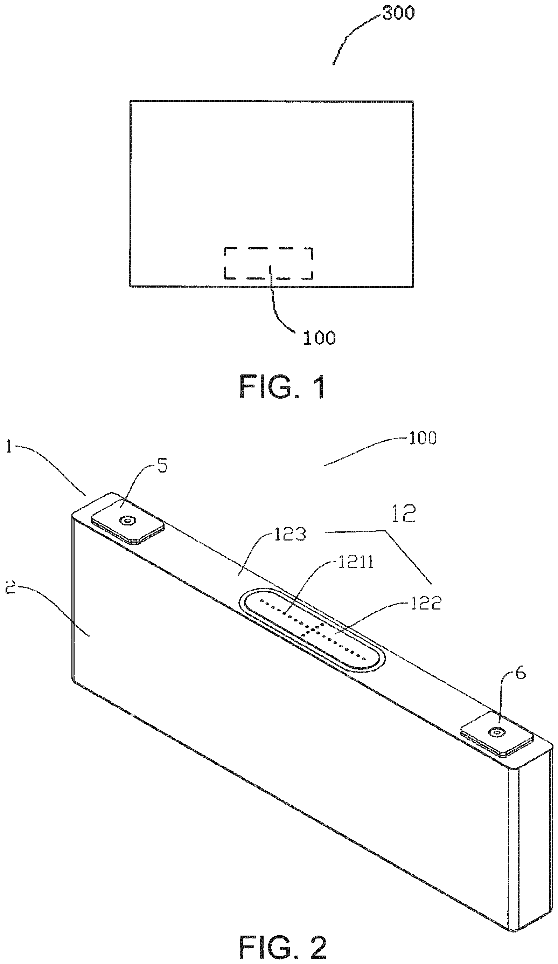

An embodiment of the disclosure provides an electronic apparatus 300. An embodiment of the disclosure provides the electronic apparatus 300, and as shown in FIG. 1, the electronic apparatus 300 may be an electric vehicle or an electric motorcycle, and the electronic apparatus 300 includes a battery 100. The electronic apparatus 300 may include a plurality of batteries 100 to form a battery assembly 200, that is, the electronic apparatus includes the battery assembly 200. The batteries and battery assembly may not be limited to the types provided in the following embodiment, and the batteries and battery assemblies in other embodiments may also be applied.

Specific embodiments of the disclosure are described below with reference to the accompanying drawings to solve the abovementioned problems. FIG. 2, FIG. 3, FIG. 5, and FIG. 6 show a battery, and the battery 100 includes a cover plate 1 and a casing 2 having an upper opening. The cover plate 1 is arranged at an opening 21 of the casing 2 and seals the opening 21. The cover plate 1 includes a cover plate body 11 and a high temperature resistant sheet 12, and the shape of the cover plate body 11 matches the shape of the opening 21 of the casing 2. In this embodiment, since the casing 2 is shown to be in a rectangular box shape, the cover plate body 11 is adaptively formed in a long strip shape. A person having ordinary skill in the art should understand that when the casing 2 of the battery is formed in other shapes, the shape of the cover plate body 11 may also be correspondingly formed in other shapes as long as the cover plate body 11 can seal the opening 21 of the casing 2. A plurality of cells 3 are arranged in the sealed space formed by the casing 2 and the cover plate 1. The cells 3 are closely arranged inside the casing 2, are electrically connected to one another, and together form a charging and discharging assembly of the battery.

It should be noted that when the casing 2 is in the shape of a rectangular box, both ends of the casing 2 may have openings in a length direction, and in this case, the cover plate 1 may cover the openings at both ends.

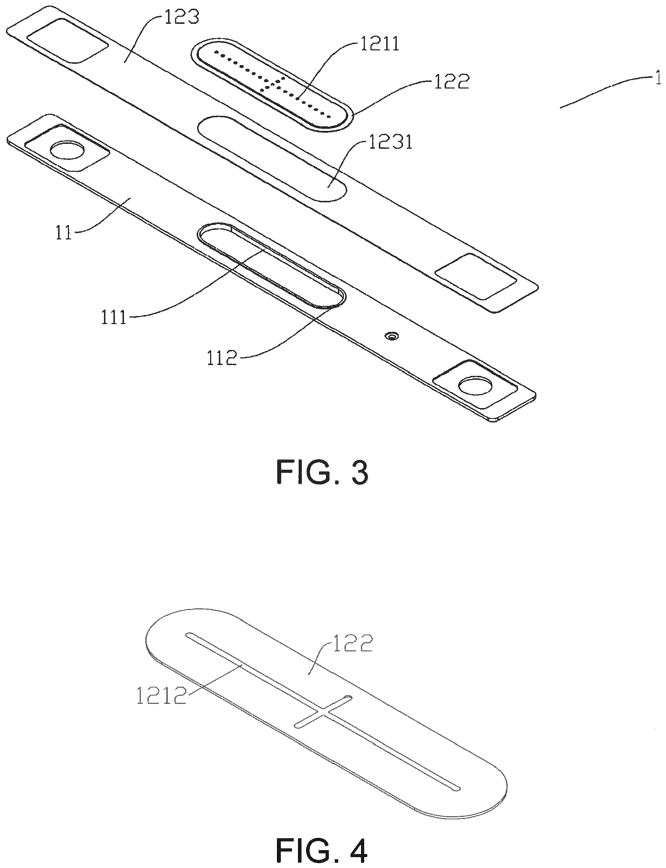

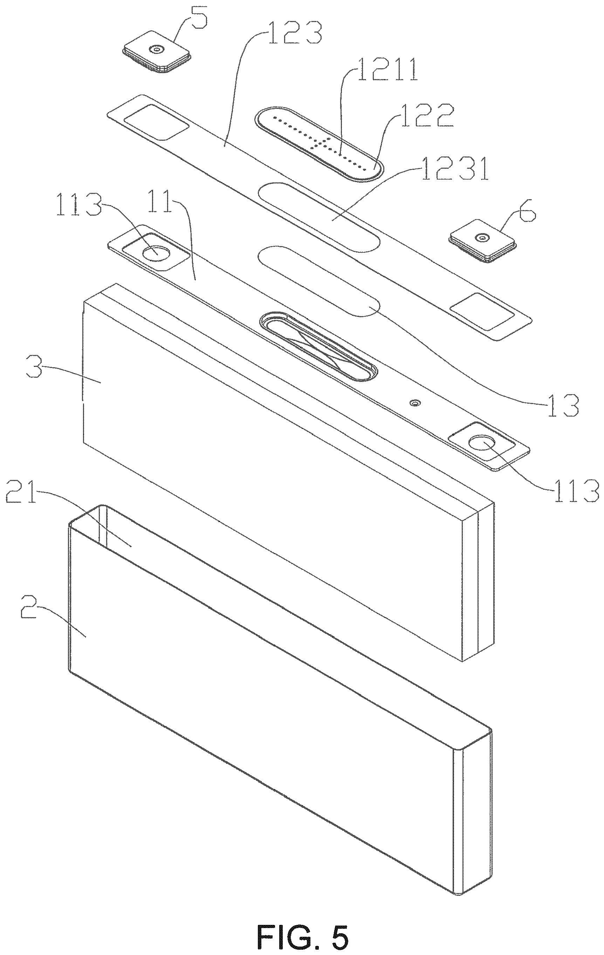

As shown in FIG. 3 and FIG. 5, the cover plate body 11 is provided with a first hole 111, and the first hole 111 is provided with an explosion-proof valve 4. The explosion-proof valve 4 may be a sheet structure attached in the first hole 111. The cover plate body 11 is further provided with two electrode holes 113 to allow each of a positive electrode 5 and a negative electrode 6 to penetrate through one of the electrode holes 113 and to protrude from the cover plate 1. The positive electrode 5 and the negative electrode 6 are electrically connected to the cell 3 in the casing 2. In this embodiment, the first hole 111 is disposed at the center position of the cover plate body 11 in the length direction, and the electrode holes 113 are symmetrically arranged on both sides of the first hole 111 and are close to both ends of the cover plate 1 in the length direction. The first hole 111 is formed as a long strip with circular arcs at both ends, and the electrode holes 113 are formed in a substantially rectangular shape. However, it is only an example, and a person having ordinary skill in the art can arbitrarily adjust the relative arrangement relationship, shapes, and sizes of the first hole and the electrode holes 113 according to actual needs. The high temperature resistant sheet 12 is provided on an upper surface of the cover plate body 11. The high temperature resistant sheet 12 has substantially the same shape as the cover plate body 11 and is attached and fixed onto the cover plate body 11. The high temperature resistant sheet 12 may be a mica sheet, a ceramic sheet, a glass sheet, or the like. The material of the high temperature resistant sheet includes one of glass fiber, mica, ceramic, and ceramic rubber. Preferably, the high temperature resistant sheet 12 has a thickness of 0.2 mm to 1 mm and can withstand a maximum temperature of 1,000 degrees Celsius.

When thermal runaway occurs in one of the plurality of batteries, the high temperature substances generated in the battery may be sprayed out from the first hole 111 and may break through a weak portion of the high temperature resistant sheet 12. However, since the cover plate 1 of the battery is also provided with the high temperature resistant sheet 12 to cover the cover plate body 11, the direct contact of the high temperature substances with the cover plate 11 is blocked, and that the structure of the cover plate 11 may not be damaged. Further, since the high temperature resistant sheet 12 covers the first hole 111, the high temperature substances are prevented from entering into the battery from the first hole 111. The probability of thermal runaway propagation is thereby lowered.

Besides, the high temperature resistant sheet 12 has the weak portion, and at least a part of an orthographic projection of the weak portion is located in the first hole 111 in a direction perpendicular to the cover plate body 11. The weak portion includes two intersecting linear structures, and the intersection point of the two linear structures is located at the center of the first hole 111. In FIG. 3 and FIG. 5, linear structures formed by arranging a plurality of holes 1211 are shown, but not limited thereto. As shown in FIG. 4, the weak portion may be a linear crack 1212. A person having ordinary skill in the art can understand that the shape of the weak portion is not limited to the shapes listed above and may be other shapes, as long as the weak portion may be easily broken when the air pressure increases. To be more specific, it is preferable that the weak portion is a structure that damages the high temperature resistant sheet 12 within the range of 1/4 to 3/4 of the thickness thereof. Each of the linear structures may be a straight line or a curved line, and the intersection point of the linear structures may not be located at the center of the first hole 111. Further, the number of linear structures is not limited to two as shown. In other embodiments, the weak portion may be one linear structure or three or more linear structures. When two or more linear structures are provided, the linear structures may also be parallel to each other or may intersect with extension lines.

Above the first hole 111 is the weak portion of the high temperature resistant sheet 12, which can be broken under the condition of high temperature and high pressure inside the battery, so that a channel for the high temperature and high pressure inside the battery to be released to the outside is formed, and the battery is thus prevented from exploding or catching fire. That is, in the disclosure, through the arrangement of the high temperature resistant sheet 12, the original pressure relief function of the explosion-proof valve and the first hole 111 of one battery itself can be ensured to function normally, and the chain reaction caused by the thermal runaway of other batteries may be prevented from occurring. The overall safety and stability of the batteries is thus improved.

The implementation details of this embodiment are specifically described below, and the following content is only provided for the convenience of understanding and is not necessary for implementation of this embodiment.

Further, as shown in FIG. 2 and FIG. 3, the high temperature resistant sheet 12 further has a body portion 123 connected to a wall surface on a top portion of the cover plate body 11 and a shielding portion 122 separating the body portion 123 from the weak portion. The materials of the shielding portion 122 and the body portion 123 may be the same or different. A second mounting hole 1231 covered by the shielding portion 122 is provided on the body portion 123, and at least a part of the second mounting hole 1231 is located above the first hole 111. The body portion 123 extends along the length direction of the cover plate body 11, and both are formed in substantially the same shape and size. The shielding portion 122 is located above the first hole 111 and covers the first hole 111. In other embodiments, the shielding portion 122 may also cover part of the first hole 111.

Further, as shown in FIG. 2 and FIG. 3, the second mounting hole 1231 is a through hole, the shielding portion 122 is disposed above the body portion 123, and an area of the shielding portion 122 is greater than that of the through hole. The shielding portion 122 is spaced apart from the cover plate body 11, so as to prevent the shielding portion 122 from being worn by the structure on the cover plate body 11. An outer edge portion of the shielding portion 122 is pasted and fixed to an upper surface of the body portion 123, and the connection between the shielding portion 122 and the body portion 123 is thus achieved. Understandably, in other embodiments, the body portion 123 is two independent portions, the two portions are spaced apart to form the second mounting hole 1231, and the shielding portion 122 connects the two portions.

Further, in other embodiments, the second mounting hole 1231 is a through hole, and the shielding portion 122 is embedded in the through hole.

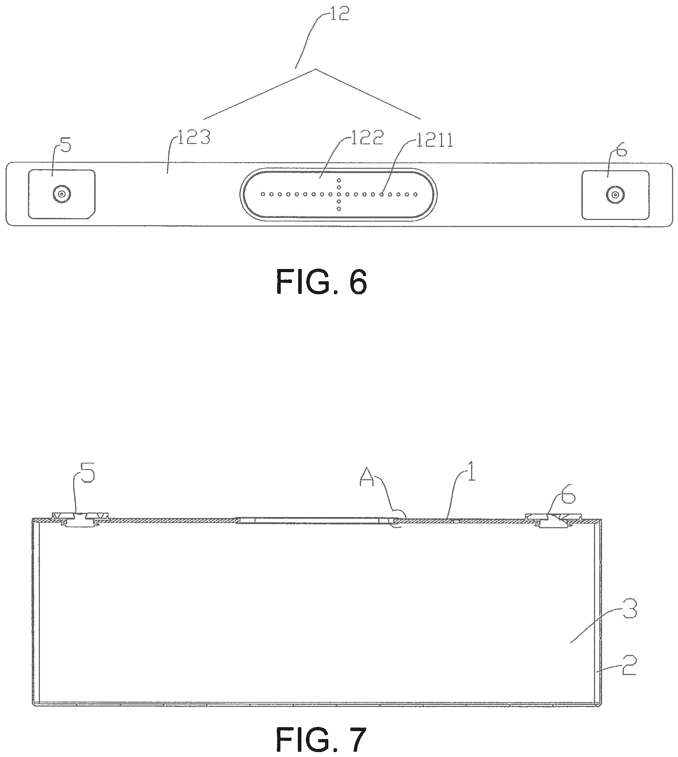

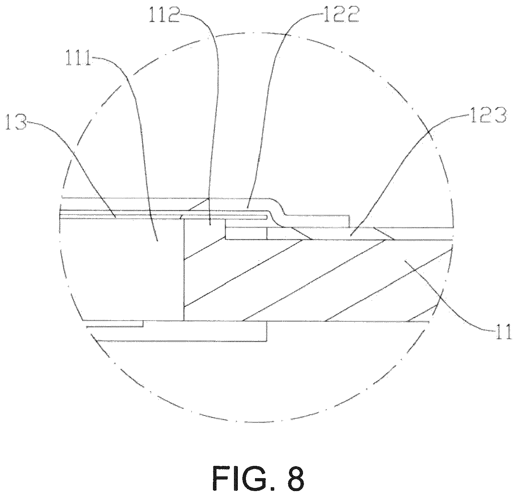

Optionally, as shown in FIG. 7 and FIG. 8, the shielding portion 122 is an arc-shaped structure protruding in a direction away from the first hole 111. Since the central portion of the shielding portion 122 protrudes in a direction away from the first hole 111, a gap is formed between the first hole 111 and the shielding portion 122. In this way, the air in the gap can produce a certain thermal insulation effect, so when the internal temperature of the battery increases, the speed of temperature rise on the top portion of the cover plate body 11 is slowed down.

Further, as shown in FIG. 3, the cover plate body 11 has a boss 112 around an outer edge of the first hole 111.

Further, as shown in FIG .5 and FIG. 8, a protective film 13 is provided between the shielding portion 122 and the boss 112, the protective film 13 is arranged on the boss 112, and the protective film 13 can be attached to the boss 112. A distance between an upper surface of the protective film 13 and a lower surface of the shielding portion 122 ranges from 0.09 mm to 0.3 mm. In this way, the protective film 13 forms further protection on the first hole 111 without interfering with the normal explosion-proof and pressure relief of the battery. The protective film 13 may be a plastic film, a silicone mold, or the like. In other embodiments, there may be no protective film.

Optionally, as shown in FIG. 7 and FIG. 8, a distance between the lower surface of the shielding portion 122 and an upper surface of the boss 112 is 0.08 mm to 0.1 mm. This distance range ensures that there is no contact between the shielding portion 122 and the first hole 111, and a sufficient space is thus formed. The air existing in the space acts as a heat insulating layer, and when the internal temperature of the battery increases, the speed of temperature rise on the top portion of the cover plate body 11 may be slowed down. Certainly, in other embodiments, the shielding portion 122 may also be disposed in contact with the boss 112, such as being attached to the boss 112 to cover the first hole 111.

Further, a thickness of the shielding portion 122 is less than or equal to a thickness of the body portion 123. To be specific, the thickness of the shielding portion 122 is 0.2 mm to 1 mm, and this thickness range is more suitable for breaking of the shielding portion 122 when the pressure of the battery is released. As such, while the body portion 123 separates the high temperature substances from the cover plate body 11, the shielding portion 122 prevents the high temperature substances from falling into the inside of the battery from the first hole 111, and the safety and reliability of the battery is thus further improved.

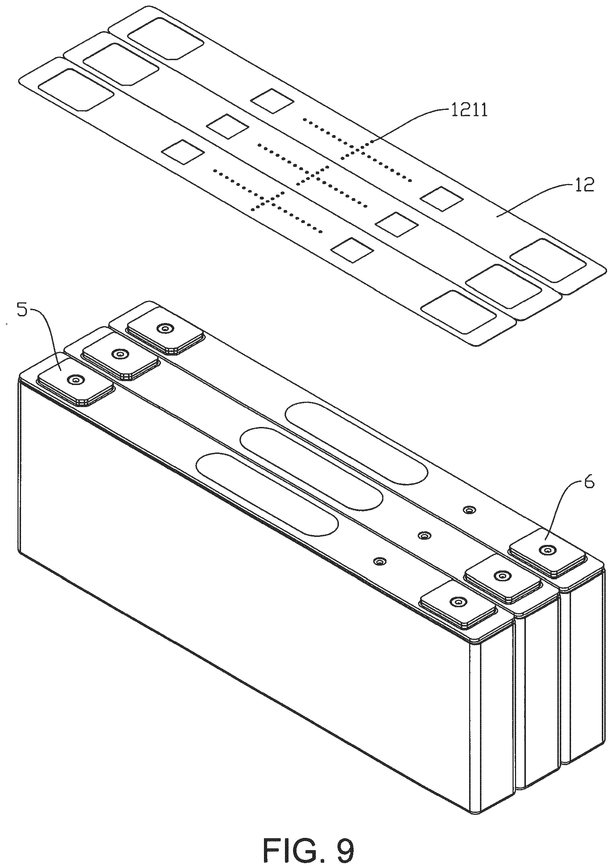

Another embodiment of the disclosure relates to the battery assembly 200. FIG. 9 shows an exploded view in which the high temperature resistant sheet of the battery assembly 200 is separated from the cover plate body. The battery assembly 200 includes a plurality of the batteries 100 of the abovementioned embodiments. The batteries 100 are stacked along a direction perpendicular to the large surfaces of the batteries 100 to form the battery assembly 200, and the large surface of each of the batteries 100 is one surface in a thickness direction of the batteries 100. That is, each battery 100 has the same structure as the battery 100 in the above embodiment, and each battery 100 includes an independent high temperature resistant sheet.

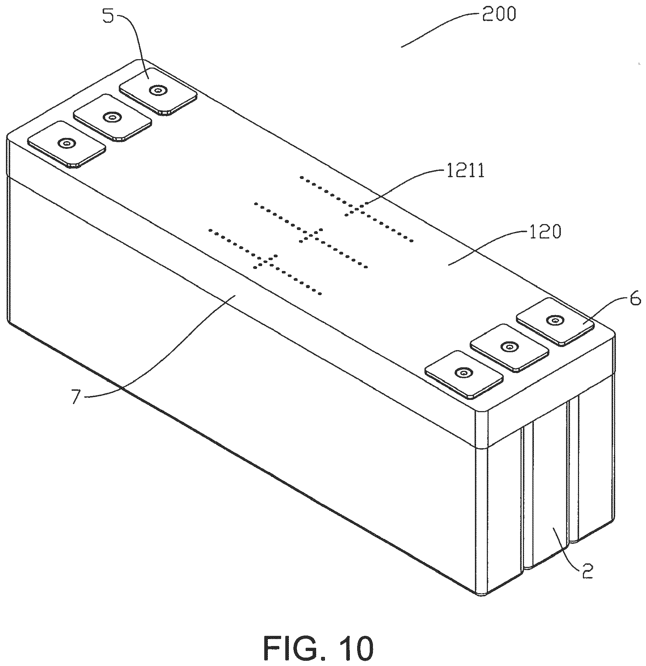

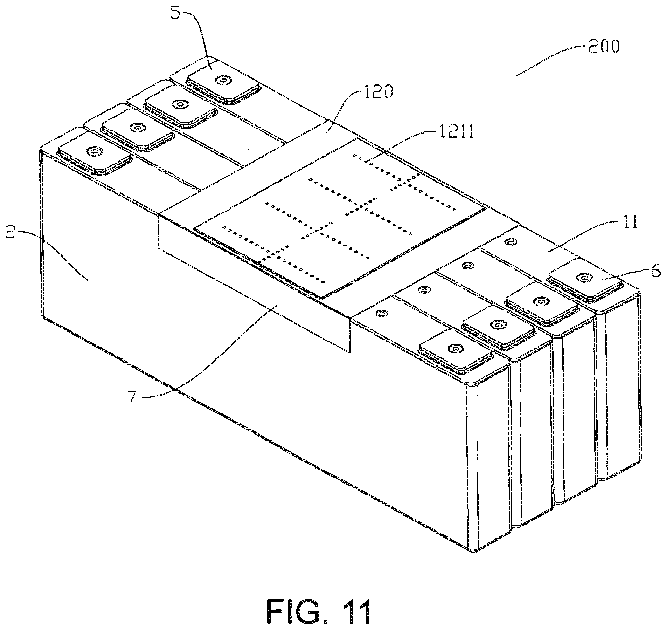

It can be understood that the structure of each battery in the battery assembly 200 is slightly different from that of the battery 100, for example, the structure of the high temperature resistant sheet of the cover plate is different. As shown in FIG. 10 and FIG. 11, the high temperature resistant sheets of the batteries are connected together as a single piece structure, that is, a high temperature resistant piece is formed. In the battery 100 of the abovementioned embodiment, the high temperature resistant sheets of the batteries 100 are independent of one another. The high temperature resistant piece may be integrally formed as a whole or may be formed by a plurality of high temperature resistant sheets standing together. During installation, after the cover plate body is packaged with the corresponding casing, the high temperature resistant piece formed by the connected high temperature resistant sheets 12 can be covered on the plurality of cover plate bodies 11. Each cover plate body 11 is also provided with a weak portion on the corresponding high temperature resistant sheet 12, and the structure of the weak portion is the same as that in the abovementioned embodiment. The thickness of the high temperature resistant sheet 12 is 0.2 mm to 1 mm, and a depth of the weak portion accounts for 1/4 to 3/4 of the thickness of the high temperature resistant sheet, that is, a thickness of the high temperature resistant piece is 0.2 mm to 1 mm.

As shown in FIG. 3, the high temperature resistant sheet 12 further has the body portion 123 connected to the wall surface on the top portion of the cover plate body 11 and the shielding portion 122 separating the body portion 123 from the weak portion. The materials of the shielding portion 122 and the body portion 123 may be the same or different. The second mounting hole 1231 covered by the shielding portion 122 is provided on the body portion 123, and at least a part of the second mounting hole 1231 is located above the first hole 111. The body portion 123 extends along the length direction of the cover plate body 11, and both are formed in substantially the same shape and size. The shielding portion 122 is located above the first hole 111 and covers the first hole 111. In other embodiments, the shielding portion 122 may also cover part of the first hole 111.

An edge of the high temperature resistant piece 120 has a folded portion 7, and the folded portion extends towards the bottom of the battery assembly 200. The folded portion 7 may be fixed onto a side wall of an outer casing by bonding, heat riveting, or using screws. The high temperature resistant piece 120 as shown in FIG. 9 covers all regions of the cover plate body 11, the high temperature resistant piece 120 is surrounded by the folded portion 7, and the folded portion 7 is connected to a side wall of the battery assembly 200. As shown in FIG. 10, the high temperature resistant piece 120 extends downwards along the narrow sides of the batteries, the high temperature resistant piece 120 does not cover all regions of the cover plate body 11, and the folded portion 7 is folded downwards to abut against the outer casing of the battery arranged on the outermost edge.

It is not difficult to find that this embodiment is a system embodiment corresponding to the abovementioned battery embodiment. This embodiment may be used together with the above battery embodiment to implement the relevant technical details mentioned in the above battery embodiment, which is still valid in this embodiment. Repeated description is not provided herein to avoid repetition. Correspondingly, the relevant technical details mentioned in this embodiment can also be applied to the abovementioned battery embodiment.

In order to solve the technical problems of the battery, an embodiment of the disclosure provides a battery including a casing, a cell, and a cover plate. The casing has an opening. The cell is disposed in the casing. The cover plate covers the opening of the casing. The cover plate includes a cover plate body and a high temperature resistant sheet. The cover plate body is provided with a first hole. The high temperature resistant sheet is disposed on an upper surface of the cover plate body and covers an upper opening of the first hole. The high temperature resistant sheet has a weak portion, and at least a part of an orthographic projection of the weak portion is located in the first hole in a direction perpendicular to the cover plate body.

In an embodiment, a thickness of the high temperature resistant sheet is 0.2 mm to 1 mm, and a depth of the weak portion accounts for 1/4 to 3/4 of the thickness of the high temperature resistant sheet.

In an embodiment, the weak portion includes a crack or a plurality of holes.

In an embodiment, the weak portion includes a plurality of linear structures, and at least two linear structures intersect or intersect with extension lines.

In an embodiment, the high temperature resistant sheet further has a body portion connected to the cover plate body and a shielding portion separating the body portion from the weak portion. At least a part of the shielding portion is located above the first hole, and the high temperature resistant sheet extends along a length direction of the cover plate body.

In an embodiment, the body portion is provided with a second mounting hole. The shielding portion covers the second mounting hole, and the second mounting hole at least partially overlaps the first hole in a height direction.

In an embodiment, the second mounting hole is a through hole, and the shielding portion is disposed above the body portion.

In an embodiment, the second mounting hole is a through hole, and the shielding portion is embedded in the second mounting hole.

In an embodiment, the shielding portion is an arc-shaped piece protruding in a direction away from the first hole.

In an embodiment, the cover plate body is provided with a boss, and the shielding portion is located above the boss.

In an embodiment, a protective film is disposed between the shielding portion and the boss, the protective film is connected to the boss. A distance between an upper surface of the protective film and a lower surface of the shielding portion is 0.08 mm to 0.1 mm.

In an embodiment, a distance between a lower surface of the shielding portion and an upper surface of the boss is 0.09 mm to 0.3 mm.

In an embodiment, a thickness of the shielding portion is 0.2 mm to 1 mm, and the thickness of the shielding portion is less than or equal to a thickness of the body portion.

In an embodiment, the high temperature resistant sheet is a mica sheet or a glass sheet.

An embodiment of the disclosure further provides a battery assembly including a plurality of batteries stacked along a direction perpendicular to large surfaces of the batteries.

Each of the batteries includes a casing, a cell, and a cover plate. The casing has an opening. The cell is disposed in the casing. The cover plate covers the opening of the casing. The cover plate includes a cover plate body and a high temperature resistant sheet. The cover plate body is provided with a first hole. The high temperature resistant sheet is fixed to an upper surface of the cover plate body and covers an upper opening of the first hole. The high temperature resistant sheet has a weak portion, and at least a part of an orthographic projection of the weak portion is located in the first hole in a direction perpendicular to the cover plate body.

In an embodiment, the high temperature resistant sheets of the batteries are connected together as a single piece structure, or the high temperature resistant sheets of the batteries are separated from one another.

In an embodiment, a thickness of the high temperature resistant sheet is 0.2 mm to 1 mm, and a depth of the weak portion accounts for 1/4 to 3/4 of the thickness of the high temperature resistant sheet.

In an embodiment, the weak portion includes a crack or a plurality of holes.

In an embodiment, the high temperature resistant sheet further has a body portion connected to the cover plate body and a shielding portion separating the body portion from the weak portion. At least a part of the shielding portion is located above the first hole, and the high temperature resistant sheet extends along a length direction of the cover plate body.

An embodiment of the disclosure further provides an electronic apparatus including the battery as described in the foregoing embodiments. The preferred embodiments of the disclosure have been described above in detail. However, it should be understood that aspects of the embodiments can be modified, if desired, to employ aspects, features, and concepts of various patents, applications, and publications to provide additional embodiments.

## Claims

1. A battery **characterized by** comprising:
a casing (2) having an opening (21);
a cell (3) disposed in the casing (2); and
a cover plate (1) covering the opening (21) of the casing (2),
wherein the cover plate (1) comprises:
a cover plate body (11) provided with a first hole (111); and
a high temperature resistant sheet (120) disposed on an upper surface of the cover plate body (11) and covering an upper opening of the first hole (111), wherein the high temperature resistant sheet (120) has a weak portion, and at least a part of an orthographic projection of the weak portion is located in the first hole (111) in a direction perpendicular to the cover plate body (11).

2. The battery according to claim 1, **characterized in that** a thickness of the high temperature resistant sheet (120) is 0.2 mm to 1 mm, and a depth of the weak portion accounts for 1/4 to 3/4 of the thickness of the high temperature resistant sheet (120); or
the weak portion comprises a crack (1212) or a plurality of holes (1211).

3. The battery according to claim 2, **characterized in that** the weak portion comprises a plurality of linear structures, and at least two linear structures intersect or intersect with extension lines.

4. The battery according to any one of claims 1-3, **characterized in that** the high temperature resistant sheet (120) further has a body portion (123) connected to the cover plate body (11) and a shielding portion (122) separating the body portion (123) from the weak portion, at least a part of the shielding portion (122) is located above the first hole (111), and the high temperature resistant sheet (122) extends along a length direction of the cover plate body (11).

5. The battery according to claim 4, **characterized in that** the body portion (123) is provided with a second mounting hole (1231), the shielding portion (122) covers the second mounting hole (1231), and the second mounting hole (1231) at least partially overlaps the first hole (111) in a height direction; or,
the shielding portion (122) is an arc-shaped piece protruding in a direction away from the first hole (111); or,
the cover plate body (11) is provided with a boss (112), and the shielding portion (122) is located above the boss (112); or,
a thickness of the shielding portion (122) is 0.2 mm to 1 mm, and the thickness of the shielding portion (122) is less than or equal to a thickness of the body portion (123).

6. The battery according to claim 5, **characterized in that** the second mounting hole (1231) is a through hole, and the shielding portion (122) is disposed above the body portion (123); or,
the second mounting hole (1231) is a through hole, and the shielding portion (122) is embedded in the second mounting hole (1231).

7. The battery according to claim 5, **characterized in that** a protective film (13) is disposed between the shielding portion (122) and the boss (112), the protective film (13) is connected to the boss (112), and a distance between an upper surface of the protective film (13) and a lower surface of the shielding portion (122) is 0.08 mm to 0.1 mm.

8. The battery according to claim5, **characterized in that** a distance between a lower surface of the shielding portion and an upper surface of the boss (112) is 0.09 mm to 0.3 mm.

9. The battery according to claim 1, **characterized in that** the high temperature resistant sheet (120) is a mica sheet or a glass sheet.

10. A battery assembly, **characterized by** comprising: a plurality of batteries (100) stacked along a direction perpendicular to large surfaces of the batteries (100),
wherein each of the batteries (100) comprises:
a casing (2) having an opening (21);
a cell (3) disposed in the casing (2); and
a cover plate (1) covering the opening (21) of the casing (2),
wherein the cover plate (1) comprises:
a cover plate body (11) provided with a first hole (111); and
a high temperature resistant sheet (120) fixed to an upper surface of the cover plate body (11) and covering an upper opening of the first hole (111), wherein the high temperature resistant sheet (120) has a weak portion, and at least a part of an orthographic projection of the weak portion is located in the first hole (111) in a direction perpendicular to the cover plate body (11).

11. The battery assembly according to claim 10, **characterized in that** the high temperature resistant sheets (120) of the batteries (100) are connected together as a single piece structure, or
the high temperature resistant sheets (120) of the batteries (100) are separated from one another.

12. The battery assembly according to claim 10, **characterized in that** a thickness of the high temperature resistant sheet (120) is 0.2 mm to 1 mm, and a depth of the weak portion accounts for 1/4 to 3/4 of the thickness of the high temperature resistant sheet (120).

13. The battery assembly according to claim 10, **characterized in that** the weak portion comprises a crack (1212) or a plurality of holes (1211).

14. The battery assembly according to claim 10, **characterized in that** the high temperature resistant sheet (120) further has a body portion (123) connected to the cover plate body (11) and a shielding portion (122) separating the body portion (123) from the weak portion, at least a part of the shielding portion (122) is located above the first hole (111), and the high temperature resistant sheet (120) extends along a length direction of the cover plate body (11).

15. An electronic apparatus **characterized by** comprising the battery (100) according to claim 1.
